Europäisches Patentamt

European Patent Office

Office européen des brevets

(11) Publication number: **0 367 451**
**A2**

# EUROPEAN PATENT APPLICATION

(21) Application number: 89310800.1

(51) Int. Cl.⁵: **G05B 15/02**

(22) Date of filing: 20.10.89

(30) Priority: 31.10.88 US 265186

(43) Date of publication of application:
09.05.90 Bulletin 90/19

(84) Designated Contracting States:
DE FR GB IT

(71) Applicant: AMERICAN TELEPHONE AND
TELEGRAPH COMPANY
550 Madison Avenue
New York, NY 10022(US)

(72) Inventor: Karlicek, Robert Frank, Jr.
170 Sprague Avenue
South Plainfield New Jersey 07080(US)
Inventor: McKnight, Lee Graves
31 Hamilton Road
Morristown New Jersey 07960(US)
Inventor: Milton, Everett Terry
Deceased
Deceased(US)

(74) Representative: Buckley, Christopher Simon
Thirsk et al
AT&T (UK) LTD. AT&T Intellectual Property
Division 5 Mornington Road
Woodford Green, Essex IG8 OTU(GB)

(54) Process control system and method.

(57) As increasing programming effort is spent on the development of computer software for the control of manufacturing and other industrial processes, and as computer systems and attendant communications facilities are evolving rapidly, it is desirable to provide for systems structure which is conducive to evolution with respect to process definition as well as with respect to operating hardware. Particularly flexible in these respects is a system having host-satellite structure, in which at least a satellite computer has multi-tasking capability.

## PROCESS CONTROL SYSTEM AND METHOD

### Technical Field

The invention is concerned with manufacturing and operations control systems as may be used, e.g., in semiconductor device manufacture, and with processes controlled by such systems.

### Background of the Invention

Due to the operational complexity of many manufacturing and other industrial processes, and in the interest of economy of production, processing, and operations, there is a continuing trend towards automated or computerized control in a variety of technical fields. For example, automated control is applicable in the assembly of automobiles, appliances, and other consumer articles, in the refining of petroleum and the manufacture of petroleum-based products, in the controlled operation of power generation and distribution facilities and of transportation systems, and, quite generally, wherever sequentially intricate physical or chemical processes are used. For more detailed information regarding specific control procedures see, e.g., the book by
E. R. Robinson, *Microcomputers in the Process Industry*, Ellis Horwood Limited, 1985, including an extensive list of references to the open literature; see also, for documentation with respect to specific systems,
R Curbelo et al., "Interactive Multitasking Executive IMX$^{Tm}$)- a Real-time Multitasking Fourier Spectrometer System for Examination of GC Effluents", in *Proceedings of the Society of photo-Optical Instrumentation Engineers*, Vol. 148 (1978), pp. 99-111, and
R. D. Burris, *EBT Data Acquisition System Control Facilities*, ORNL/CSD/TM-166, Oak Ridge National Laboratory, 1982.

A particularly important field of application of control systems is represented by the industrial-scale manufacture of miniature articles and devices such as, e.g., electronic and optoelectronic devices intended for use in computing and communications equipment. Typically, such manufacture involves a sequence of physical, chemical, and metallurgical processing steps including the deposition of successive layers having specified composition, the patterning of layers by selective removal of deposited material, and the testing and evaluating of intermediary and final structure.

As processes have been brought under automated or computer control, systems typically have been implemented case by case and as programmed for a specific control computer. However, as computer systems and communications facilities are evolving, e.g., with respect to speed and capacity, it is frequently desired to replace computer hardware by more powerful or more economical equipment - in which case control systems are preferred which are readily transferable to run on new hardware. Moreover, as controlled processes undergo development and modification, means are desired for permitting a control computer not only to tend to an assigned control function, but also to be available to the process engineer for the development of new functions or features.

### Summary of the Invention

A process control system, when implemented as a host-satellite system with at least one multi-tasking satellite processor, provides capabilities such as, e.g., ease of process modification, change-over, and experimentation.

A *multi-tasking processor* is here defined as a processor or computer which acts upon several programs in a sequential or cyclic fashion, each program being allocated computer time in accordance with a program priority scheme, and retaining control of the computer either until control is relinquished or else until control is lost due to an externally imposed change in priorities (imposed, e.g., by console operator intervention, by a clock signal, or by a signal from an apparatus or equipment interface device) - at which time control picks up with another program at the point it had reached during an earlier period of activation. The presence of parallel computing capability is not precluded.

A *host-satellite system* is here defined as a plurality of interconnected processors or computers, including a host processor equipped with a file system and a satellite processor capable of producing host-processor files. Preferably, the host processor is also a multi-tasking processor.

### Brief Description of the Drawing

FIG. 1 is a schematic diagram of a host-satellite system representing a preferred embodiment of a process control system in accordance with the invention; and
FIG. 2 is a block diagram of satellite software including process programs and an operating system as here designated as a *command-and-control system.* .

## Detailed Description

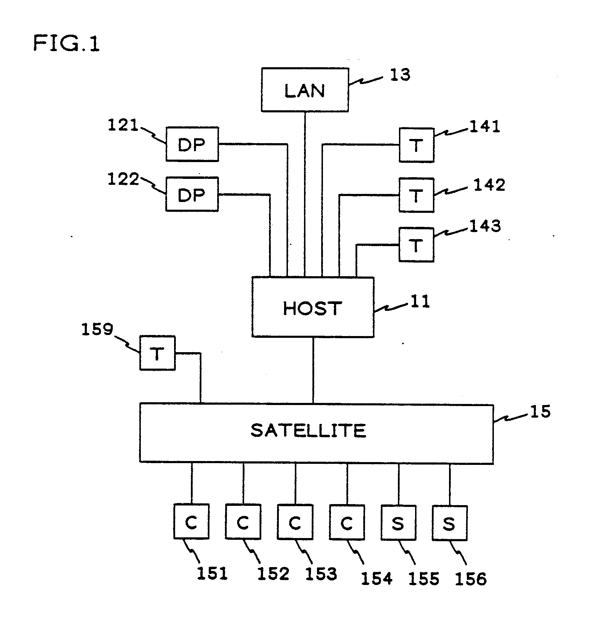

FIG. 1 shows host processor 11 which is provided with a (multi-tasking) operating system such as, e.g., an (unmodified) UNIX™ operating system and which is connected to Dataphone® data sets 121 and 122, a local-area network 13, and computer terminals 141, 142, and 143. Host processor 11 is further connected to one or several microprocessor satellite processors 15 which, in turn, are connected to a number of process control ports 151, 152, 153, and 154, and sensors 155 and 156, as well as to a computer terminal 159 serving as satellite console.

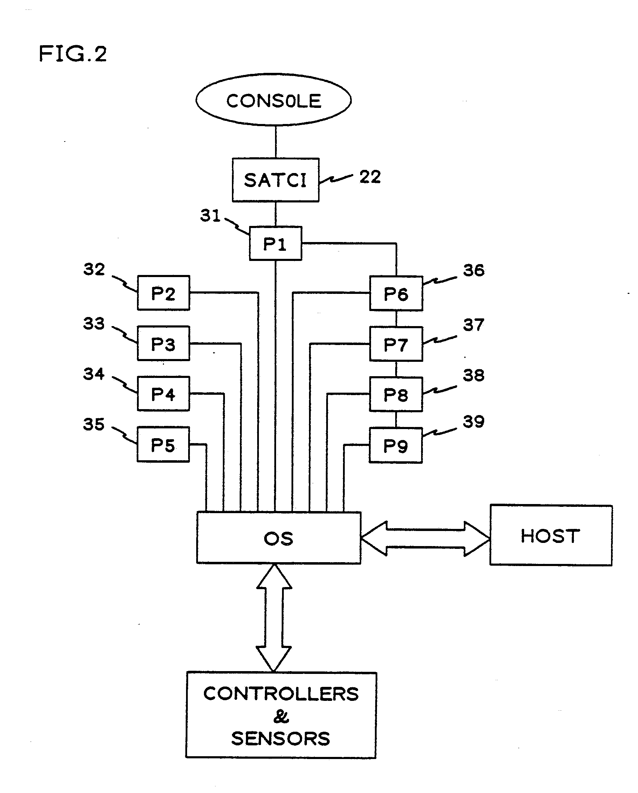

FIG. 2 shows a number of process routines 31 through 39, each in communication with a neighboring routine as well as with satellite operating system 21; each process routine is assigned a priority which is used in the scheduling of process routine activation. (Shown specific communications links are exemplary, and other arrangements are not precluded.) Shown also is satellite command interpreter routine 22 for handling communications with a satellite console terminal such as, e.g., terminal 159 of FIG. 1 - via, e.g., an RS-232 standard communications line.

A preferred process control system in accordance with the invention is implemented by means of a host-satellite computer facility with, typically, several (microprocessor) satellite computers connected to a host computer. The role of the host computer may include the loading, typically upon satellite-computer request, of programs into satellite computers, and the receiving and evaluation of data returned by the satellite computers. Typically under satellite computer control are physical monitoring and control functions such as, e.g., the sensing and setting of temperatures, pressures, and flow rates, the operation of valves, and the activation of motors instrumental, e.g., in manufacturing methods as may involve chemical vapor deposition, molecular beam epitaxy, or metal-organic chemical vapor deposition. Other functions under satellite computer control may include digital input and output, and analog-to-digital (A/D) and digital-to-analog (D/A) conversion. Such functions are understood as represented by equipment or apparatus interface device parameters as set or received by a satellite computer. While a satellite computer may be considered as normally connected to the host computer, e.g., for process data storage, a satellite preferably does not depend on host connection for process execution.

Conveniently, programs designed for operating on host or satellite computers are written in a machine-independent language such as, e.g., "C" under a UNIX timesharing system. Preferably, for satellite programming, the C-language is augmented by a set of process-control subroutines which may be kept in a satellite-specific library. Compilation into host and satellite machine-language programs may be carried out by a compiler and a cross-compiler in the host computer. In the interest of minimizing the demands made on the process engineer with respect to computer detail, the description or "recipe" of control functions may be provided in tabular form, to be translated by support software in the host computer into machine language for the satellite computer. In the process of translation, various checks may be performed regarding formal correctness and validity of instructions entered, with functional correctness remaining subject to operational verification. As a further aid to the verification of the correctness of process instructions, a simulation program may be provided in the host computer, e.g., to provide a printout for visual verification of a process schedule as compiled from the engineer's instructions. While, typically, no programming is required on the part of the engineer, the development of "custom programs" is not precluded. For this purpose, use of the (augmented) "C" language is convenient as it allows description of a process sequence in terms close to those already familiar to the engineer.

Among hardware suitable for use as a satellite computer are PDP11/23 and PDP11/73 microprocessors as manufactured by the Digital Equipment Corporation and as provided, e.g., with DLV11 RS-232 interface ports for communication with the host, and with suitable process-control hardware to control the apparatus. Apparatus may be controlled by back-plane hardware, by hardware in a proprietary back plane, or by means of an RS-232 data link or IEEE-488 bus. As process control typically takes place in an electrically noisy environment, interface equipment is preferred in which analog and digital signals are handled separately. Standard rack-mountable terminal strips may be used for easy access to process-control interface cards. Communication between a satellite processor and the engineer or process operator may be via a standard display terminal and keyboard.

Hardware suitable for use as a host computer includes the AT&T 3B2/310 and PC 6300+ computers, and the Digital Equipment Corporation PDP 11/73 computer, preferably as provided with a UNIX operating system. The process-control host routine may be handled and administered by a UNIX operating system like any other applications program, so that it is even possible to have more than one host routine active under a host operating system - each host routine serving its own set of satellites. A host computer conveniently provides for an engineering information system including, e.g., inventory management and materials scheduling capabilities, for networking and support functions, for the handling of process diagnostics as transmitted by satellite processors, and for programming tools for the modification of process recipes.

Preferred software allows the engineer to specify process control and monitoring hardware and related commands in terms of symbols familiar to him, i.e., in terms related to the process being controlled rather than to the process control system, and all hardware information required to control a device, including conversion factors to set values in engineering units, may be contained in the process definition. Conveniently, entering of commands is via a standard terminal with screen and keyboard, connected to a satellite control terminal. (The following tasks may be provided for by a typical set of commands: setting an analog output, reading an analog input or output, checking the status of digital devices, reading an analog or string-driven device (the latter being controlled by a series of characters as supplied, e.g., by an IEEE-488 bus, an RS-232, or any other local-area network connection), writing such a device, controlling an analog or digital device, setting a process priority, reading a process priority, sending a message to a program, reading a message from a program, reading the time, pausing, executing a command on the host machine, and starting the execution of a new process in a satellite.

Multi-tasking in a control processor in accordance with the invention can serve a number of purposes. For example, multi-tasking can be used in the implementation of process changes by adding new features to a process even while a current version of the process remains operational. Also, add-on hardware can readily be accommodated without changing existing, tested process routines, critical portions of a process can be run as separate programs simultaneously and without need for handling of process interrupts, and process conditions can be monitored or modified while a process is underway. Custom programs can be executed, alternating in multi-tasking fashion, with other programs defining a process.

Example

In the production of gallium arsenide semiconductor devices, materials of precisely specified composition are sequentially deposited on a substrate as epitaxial layers. Deposition may take place in a chemical-vapor-deposition reactor, and the operation of such reactor preferably is under automatic process control, e.g., with respect to reactor temperature, reagent gas flows, and substrate movement. At any one time the reactor is in a state defined by a number of parameters: analog-voltages as supplied to mass flow controllers, on-off signals as supplied to solenoid valves, and position values as supplied to stepper motor drives. Depending on the complexity of a process, as many as 400 variables may be required to define such a reactor state. A process may be specified by a file in which tabular rows correspond to devices (solenoid valves, mass-flow controllers, etc.), and in which successive tabular columns define reactor state as a function of time. The process specification is compiled in the host processor into a run-command file for the satellite processor; upon request by the satellite processor, this file is loaded into the satellite processor for execution as a command routine; and, during execution additional satellite routines are called upon in the satellite processor to assist, in multi-tasking fashion, in the execution of the run commands. In the course of execution, process effectors are being actuated to realize desired parameter settings, and sensors are being read to produce data which are passed by the satellite processor to the file system of the host processor.

## Claims

1. A method of industrial processing in accordance with a process routine which comprises processing instructions,
said instructions comprising the setting of a plurality of processing parameters,
said setting resulting from a command issued by a first computer which here is designated as satellite computer,
said satellite computer being connected to a second computer which here is designated as host computer and which is equipped with a file system,
said satellite computer and said host computer being adapted for said satellite computer to provide data to said host computer, and
a plurality of process routines being executed in multi-tasking fashion by said satellite computer.

2. The method of claim 1 in which said host computer is adapted to execute a plurality of host routines in multi-tasking fashion.

3. The method of claim 1 in which said plurality of processing parameters comprises a temperature parameter.

4. The method of claim 1 in which said plurality of processing parameters comprises a pressure parameter.

5. The method of claim 1 in which said plurality of processing parameters comprises a flow-rate parameter.

6. The method of claim 1 in which said plurality of processing parameters comprises a voltage parameter.

7. The method of claim 1, said instructions further comprising the monitoring of at least one processing parameter.

8. The method of claim 1, said processing comprising the manufacture of an article.

9. The method of claim 8 in which said article is a semiconductor device.

10. The method of claim 1, said processing comprising chemical processing.

FIG.1

EP 0 367 451 A2

FIG.2